Europäisches Patentamt

European Patent Office

Office européen des brevets

(11) Publication number: **0 216 566 B1**

## EUROPEAN PATENT SPECIFICATION

(45) Date of publication of patent specification: **25.03.92**  (51) Int. Cl.⁵: **B60C  11/04**

(21) Application number: **86306963.9**

(22) Date of filing: **10.09.86**

(54) **Pneumatic radial tyre.**

(30) Priority: **10.09.85 JP 201401/85**

(43) Date of publication of application:
**01.04.87 Bulletin  87/14**

(45) Publication of the grant of the patent:
**25.03.92 Bulletin  92/13**

(84) Designated Contracting States:
**DE FR GB**

(56) References cited:
**EP-A- 0 069 464
EP-A- 0 153 899
EP-A- 0 227 322
DE-A- 2 921 377
US-A- 3 951 193**

**PATENT ABSTRACTS OF JAPAN, vol. 10, no.
55 (M-458)[2112], 5th March 1986; & JP-A-60
203 304 (SUMITOMO GOMU KOGYO K.K.)
15-10-1985**

**PATENT ABSTRACTS OF JAPAN, vol. 7, no.
102 (M-211)[1247], 30th April 1983; & JP-A-58
22 702 (YOKOHAMA GOMU K.K.) 10-02-1983**

(73) Proprietor: **SUMITOMO RUBBER INDUSTRIES
LIMITED
No. 1-1, Tsutsui-cho 1-chome
Chuo-ku Kobe-shi Hyogo 651(JP)**

(72) Inventor: **Takeuchi, Akihiro
17-23-301 Ryugadai 6-Chome
Suma-Ku Kobe-shi Hyogo-ken(JP)**
Inventor: **Koyama, Toshio
10-10 Maikodai 3-Chome
Tarumioku Kobe-shi Hyogo-ken(JP)**

(74) Representative: **Stewart, Charles Geoffrey
SP TYRES UK LIMITED Tyre Technical Di-
vision
Fort Dunlop Birmingham B24 9OT(GB)**

EP 0 216 566 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to a pneumatic radial tyre and more particularly to a pneumatic radial tyre for trucks or buses.

In such tyres, stone entrapment in the tread grooves is liable to occur under dirt running. If the tyre runs continuously with entrapped stones, the stones often inflict cracks and other injuries to the tread. Stone trapping in the tyre tread under dirt road running is known to occur most in the zigzag longitudinal groove extending along the central part of the tread in the circumferential direction of the tyre and the frequency of stone trapping is particular high in the zigzag edge portions. This may be logically explained by a postulate that the stone is forced toward the direction of the tyre rotation owing to the friction of the stone with road surface, and this movement of the stone is stopped at the zigzag edge portion, accordingly the stone is trapped in the zigzag edge portion.

As a countermeasure for this problem there have been attempts to widen the tread groove or, as exemplified in EP-A-0069464 which corresponds to the preamble of claim 1, to give a staircase-form to the tread groove walls in order to prevent the tread grooves from stone trapping and to cause any trapped stones to be ejected from the tread groove.

Previous attempts, however, have the disadvantage that wear resistance is sacrificed and the wet grip property is reduced because of the tread grooves gradually decreasing in width as the tread wears down.

An object of the present invention is to provide a pneumatic radial tyre in which stone entrapment in the tread grooves is suppressed without sacrifice of wet grip and wear resistance.

This object is achieved by the features of claim 1.

The tyre may also have lateral grooves extending from the projecting points of the sidewalls of the central groove to the projecting points of the sidewalls or the side grooves.

Further aspects of the present invention will be apparent from the following description, by way of example only, of one embodiment in conjunction with the attached diagrammatic drawings in which:-

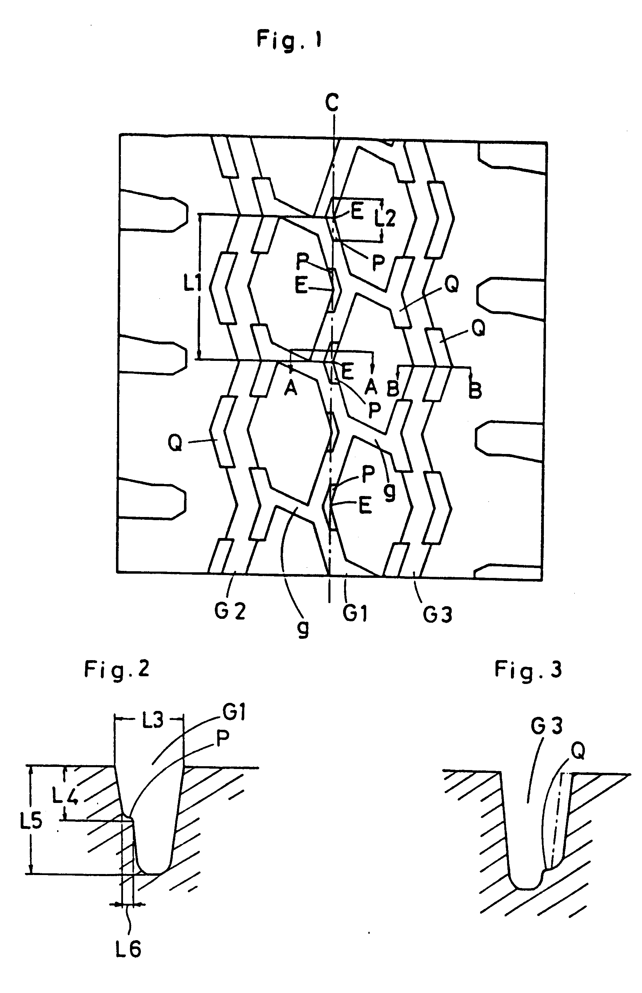

Fig.1. is a plan view of the tread portion of a tyre according to the present invention:

Fig.2. is a cross sectional view taken along the A-A line of Fig.1. and

Fig.3. is a cross sectional view taken along the B-B line of Fig.1.

The tread shown comprises a zigzag longitudinal groove G1 extending in the circumferential direction of the tyre along the equatorial plane C thereof.

Two zigzag side longitudinal grooves G2 and G3 are disposed one on either side of the central longitudinal groove G1. The side grooves G2 and G3 also extend in the circumferential direction of the tyre similarly to the central groove G1. The central groove G1 and side grooves G2 and G3 are interconnected by spaced apart laterally extending grooves g.

A plurality of first platforms P are formed at the points E where the sidewalls of the zigzag groove G1 change direction. The platforms P are of specified dimensions and are formed only on the zigzag edge portions (re-entrant points E), where the tread enters the groove $G_1$.

The depth L4 of the first platforms P from the tread surface to the platforms P is in the range of 40 to 80% of the depth L5 of the central longitudinal groove G1, and the length L2 of the platforms P in the circumferential direction of the tyre is in the range of 15 to 40% of the zigzag pitch L1 of the central longitudinal groove G1. Furthermore the width L6 of the platforms P is in the range of 5 to 20% of the width L3 of the central longitudinal groove G1. These combinations of dimensions provide the resistance to stone trapping in the centre groove G1. The side grooves G2 and G3 have second platforms Q formed intermittently on the zigzag edge portions of the sidewalls. These platforms Q are at the projecting points extending into the adjacent tread, where the sidewalls forms an obtuse angle and thus alternately appear on the opposite sides of the sidewalls. This construction aims at preventing the side longitudinal grooves from stone trapping and maintaining wet grip property at the same time. The second platforms Q may be similar to the first platforms P. This invention can be applied effectively to all types of tread patterns, for example, rib pattern, rib block pattern, rib-lug pattern and the like, wherever there is a central longitudinal groove extending along the equatorial plane C of the tyre.

## Claims

1. A pneumatic radial tyre, comprising a tread provided in its central part (with a plurality of zigzag longitudinal grooves ($G_1$,$G_2$,$G_3$) continuously in the circumferential direction of the tyre and provided with platforms (P,Q) protruding from the sidewalls thereof, the opposed sidewalls having projecting points, which extend into the adjacent tyre tread and re-entrant points (E), said longitudinal grooves including a first groove ($G_1$) provided with a plurality of first platforms (P) of uniform width (L6) located at points (E) at which the first groove (G1) changes direction, the depth (L4) of the first platforms (P) from the tread surface to the first platforms (P) being in the range of 40 to 80% of the depth (L5) of the first longitudinal grooves, characterized in that said first groove is a central groove (G1) extending along the tyre equator (C), two side grooves (G2, G3) are located one on each side of the central groove (G1), said central groove (G1) and said side grooves (G2, G3) are interconnected by lateral grooves (g), said first platforms (P) are disposed only at said re-entrant points (E) of the groove sidewalls, said first platforms (P) are circumferentially spaced separate platforms of uniform height, the circumferential length (L2) of the first platforms (P) are in the range of 15 to 40% of the zig zag Pitch (L1) of the central groove (G1), the width (L6) of the first platforms (P) are in the range of 5 to 20% of the width (L3) of the central groove (G1), each of said side grooves (G2, G3) is provided with a plurality of circumferentially spaced second platforms (Q) located one at each point at which the side groove (G2, G3) changes direction, but only at the projecting points, which extend into the adjacent tyre tread.

2. A radial tyre according to claim 1 wherein the lateral grooves (g) extend from the projecting points of the sidewalls of the central groove (G1) to the projecting points of the sidewalls of the side grooves (G2, G3).

**Revendications**

1. Pneumatique à carcasse radiale, comprenant une bande de roulement qui, dans sa partie centrale, a plusieurs gorges longitudinales sinueuses (G1, G2, G3) disposées de façon continue dans la direction circonférentielle du pneumatique et ayant des plates-formes (P, Q) qui dépassent des parois latérales des gorges, les parois latérales opposées ayant des points en saillie qui pénètrent dans la bande de roulement adjacent du pneumatique et des points rentrants (E), les gorges longitudinales comprenant une première gorge (G1) ayant plusieurs premières plates-formes (P) de largeur uniforme (L6), placées aux points (E) auxquels la première gorge (G1) change de direction, la profondeur (L4) des premières plates-formes (P), de la surface de la bande de roulement aux premières plates-formes (P), étant comprise entre 40 et 80 % de la profondeur (L5) des premières gorges longitudinales, caractérisé en ce que la première gorge est une gorge centrale (G1) placée le long de l'équateur (C) du pneumatique, deux gorges (G2, G3) des côtés sont placées de chaque côté de la gorge centrale (G1), la gorge centrale (G1) et les gorges des côtés (G2, G3) sont interconnectées par des gorges latérales (g), les premières plates-formes (P) sont disposées uniquement aux points rentrants (E) des parois latérales de la gorge, les premières plates-formes (P) sont des plates-formes séparées, espacées circonférentiellement et de hauteur uniforme, la longueur circonférentielle (L2) des premières plates-formes (P) est comprise entre 15 et 40 % du pas de sinuosité (L1) de la gorge centrale (G1), la largeur (L6) des premières plates-formes (P) est comprise entre 5 et 20 % de la largeur (L3) de la gorge centrale (G1), chaque gorge de côté (G2, G3) a plusieurs secondes plates-formes (Q) espacées circonférentiellement et placées en chaque point auquel la gorge de côté (G2, G3) change de direction, mais uniquement aux points en saillie de pénétration dans la bande de roulement adjacente du pneumatique.

2. Pneumatique à carcasse radiale selon la revendication 1, dans lequel les gorges latérales (g) sont disposées des points en saillie des parois latérales de la gorge centrale (G1) vers les points en saillie des parois latérales des gorges des côtés (G2, G3).

**Patentansprüche**

1. Radial-Luftreifen, der umfaßt einen Laufstreifen, der in seinem zentralen Teil mit einer Vielzahl von zickzack-förmigen Längsnuten (G1, G2, G3) versehen ist, die sich kontinuierlich in der Umfangsrichtung des Reifens erstrecken und mit von ihren Seitenwänden vorstehenden Plattformen (P, Q) versehen sind, wobei die einander gegenüberliegenden Seitenwände vorstehende Stellen besitzen, die sich in die benachbarte Reifenauffläche erstrecken, und überstumpfe Stellen (E), die Längsnuten einschließlich einer ersten Nut (G1) mit einer Vielzahl von ersten Plattformen (P) von gleichförmiger Breite (L6) versehen sind, die bei Stellen (E) liegen, an denen die erste Nut (G1) ihre Richtung ändert, die von der Laufstreifenfläche bis zu den ersten Plattformen (P) gemessene Tiefe (L4) der ersten Plattformen (P) im Bereich von 40 bis 80% der Tiefe (L5) der ersten Längsnuten liegen, dadurch gekennzeichnet, daß die erste Nut eine Zentralnut (G1) ist, die sich längs des Reifenäquators (C) erstreckt, zwei Seitennuten (G2, G3) jeweils an je einer Seite der Zentralnut (G) angeordnet sind, die Zentralnut (G1) und die Seitennuten (G2, G3) durch Quernuten (g) miteinander verbunden sind, die ersten Plattformen (P) nur an den überstumpfen Stellen (E) der Nut-Seitenwände angeordnet sind, die ersten Plattformen (P) in Umfangsrichtung mit Abstand angeordnete separate Plattformen gleichförmiger Höhe sind, wobei die Umfangslänge (L2) der ersten Plattformen (P) im Bereich von 15 bis 40% der Zickzack-Periodenlänge (L1) der Zentralnut (G1) liegt, die Breite (L6) der ersten Plattform (P) im Bereich von 5 bis 20% der Breite (L3) der Zentralnut (G1) liegt, jede Seitennut (G2, G3) mit einer Vielzahl von in Umfangsrichtung mit Abstand angeordneten zweiten Plattformen (Q) versehen ist, die jeweils einzeln an jeder Stelle anordnet sind, an der die Seitennut (G2, G3) ihre Richtung ändert, jedoch nur an den vorstehenden Stellen, die sich in die benachbarte Reifenlaufstrecke hinein erstrecken.

2. Radialreifen nach Anspruch 1, bei dem sich die Quernuten (g) von den vorstehenden Stellen der Seitenwände der Zentralnut (G1) zu den vorstehenden Stellen der Seitenwände der Seitennuten (G2, G3) erstrecken.

EP 0 216 566 B1

Fig. 1

Fig. 2

Fig. 3